# EUROPEAN PATENT APPLICATION

(11) **EP 3 640 795 A1**
(43) Date of publication of application: **22.04.2020**
(21) Application number: 18200506.6
(22) Date of filing: 15.10.2018
(51) Int. Cl.: G06F 8/61

(54) **APPARATUS AND METHODS FOR PROVIDING APPLICATIONS TO A COMPUTING DEVICE**

(71) Applicant: Mastercard International Incorporated, Purchase NY 10577 (US)
(72) Inventor: PHILLIPS, Simon, York, Yorkshire YO30 6LN (GB)
(74) Representative: Lawrence, Richard Anthony

(57) **Abstract**

A method for a first computing device to receive information about an application from a second computing device is provided. The first computing device comprises a processor, a display and an image capture device, and the second computing device comprises a processor and a display. The method comprises the first computing device acquiring an image with the image capture device, the image comprising at least a portion of the display of the second computing device including a launch icon associated with the application. The method further comprises the first computing device processing the image to obtain information about the application, wherein the information about the application comprises a link to a download location for the application. A computing device comprising a display, an image capture device and a processor programmed to perform the method is also provided.

## Description

### TECHNICAL FIELD

The present invention relates to a method and apparatus for providing applications to a computing device.

### BACKGROUND

Computing devices such as smartphones, tablets and even fixed or portable computers increasingly rely on a model whereby functionalities are provided by applications that are available for download via an application store. While this enables great flexibility in configuration of a user's computing device, the increasing number of applications available makes it difficult for users to identify and obtain applications of interest. Further, many applications may be provided which perform similar, overlapping or identical functions, and it may be difficult for a user to obtain an application that has particular desired features. Users frequently rely on other users' reviews or recommendations in order to choose an application to download and install. Direct recommendations from another user are particularly useful for this purpose.

However, when a user is recommended an application by another user, many cumbersome and error-prone steps are needed for the user to be able to download the application on their own device and test it for themselves. In particular, the user must be able to identify the name of the application of interest, then he/she must identify where the application can be obtained, which may be difficult if there is any ambiguity in the name of the application or if the name of the application cannot be searched easily to find a single, unambiguous download location, then he/she must actively download the application, and finally install it - if the correct application was downloaded and the application downloaded is compatible with the computing device of the user. All of these steps represent a barrier to the dissemination of applications.

Therefore, it would be desirable to have more efficient ways of enabling the sharing of information about an application between a first computing device and a second computing device.

### SUMMARY OF THE INVENTION

According to an aspect of the present invention there is provided a method for a first computing device to receive information about an application from a second computing device. The first computing device comprises a processor, a display and an image capture device. The second computing device comprises a processor and a display. The method comprises the first computing device acquiring an image with the image capture device, the image comprising at least a portion of the display of the second computing device including a launch icon associated with the application. The method further comprises the first computing device processing the image to obtain information about the application, wherein the information about the application comprises a link to a download location for the application.

In embodiments, the first computing device processing the image to obtain information about the application comprises: the first computing device processing the image to extract a link. In some such embodiments, the link is a link to a download location for the application. In other such embodiments, the method further comprises the first computing device using the link to request a link to a download location from a content provider computing device.

In embodiments, the first computing device processing the image to obtain information about the application comprises: the first computing device sending at least a part of the image to a content provider computing device, wherein the content provided computing device is configured to process the image to obtain information about the application; and the first computing device receiving from the content provider computing device a link to a download location for the application.

In embodiments, the first computing device processing the image to obtain information about the application comprises: the first computing device processing the image to extract an identifier associated with the application; the first computing device sending the identifier associated with the application to a content provider computing device; and the first computing device receiving from the content provider computing device a link to a download location for the application.

In embodiments, the first computing device requesting a link to a download location from a content provider computing device, comprises the first computing device sending information about the first computing device to the content provider computing device, wherein the information is sufficient to identify the operating system of the first computing device.

In embodiments, the first computing device sending at least a part of the image to a content provider computing device comprises the first computing device sending information about the first computing device to the content provider computing device, wherein the information is sufficient to identify the operating system of the first computing device.

In embodiments, the first computing device sending an identifier associated with the application to a content provider computing device comprises the first computing device sending information about the first computing device to the content provider computing device, wherein the information is sufficient to identify the operating system of the first computing device.

In embodiments, the launch icon comprises at least one of: a one-dimensional barcode, a two-dimensional barcode, and hidden text embedded in the icon. In some such embodiments the first computing device or the content provider computing device processing the image to obtain information about the application comprises the first computing device or the content provider computing device decoding the barcode or extracting the embedded text to obtain an identifier associated with the application or a link to a download location for the application.

In embodiments, the link to a download location for the application is obtained by the content provider computing device by matching the launch icon in the image with a launch icon recorded in a database, and extracting a link recorded in association with the matched launch icon in the database.

In embodiments, the first computing device is configured to execute an application store application. In some such embodiments the link to a download location for the application is a deep link to the application listing on the application store application.

In embodiments, the method further comprises the first computing device automatically navigating to the link address.

In embodiments, the method further comprises the first computing device automatically checking whether the application is already installed on the first computing device.

In embodiments, the method further comprises the first computing device automatically downloading and installing the application.

In embodiments, the method further comprises the first computing device automatically downloading and installing the application if the first computing device determines that the application is not already installed on the first computing device.

According to a second aspect of the disclosure, a method of providing an application on a first computing device is described. The first computing device comprises a processor, a display and an image capture device. The method comprises the first computing device acquiring an image with the image capture device, the image comprising at least a portion of the display of a second computing device comprising a processor and a display, the image including a launch icon associated with the application. The method further comprises the first computing device processing the image to obtain information about the application, wherein the information about the application comprises a link to a download location for the application.

In embodiments, the first computing device processing the image to obtain information about the application comprises: the first computing device processing the image to extract a link. In some such embodiments, the link is a link to a download location for the application. In other such embodiments, the method further comprises the first computing device using the link to request a link to a download location from a content provider computing device.

In embodiments, the first computing device processing the image to obtain information about the application comprises: the first computing device sending at least a part of the image to a content provider computing device, wherein the content provided computing device is configured to process the image to obtain information about the application; and the first computing device receiving from the content provider computing device a link to a download location for the application.

In embodiments, the first computing device processing the image to obtain information about the application comprises: the first computing device processing the image to extract an identifier associated with the application; the first computing device sending the identifier associated with the application to a content provider computing device; and the first computing device receiving from the content provider computing device a link to a download location for the application.

In embodiments where the method further comprises the first computing device using the link to request a link to a download location from a content provider computing device, the first computing device requesting a link to a download location from a content provider computing device comprises the first computing device sending information about the first computing device to the content provider computing device, wherein the information is sufficient to identify the operating system of the first computing device.

In embodiments where the first computing device processing the image to obtain information about the application comprises the first computing device sending at least a part of the image to a content provider computing device, the first computing device sending at least a part of the image to a content provider computing device comprises the first computing device sending information about the first computing device to the content provider computing device, wherein the information is sufficient to identify the operating system of the first computing device.

In embodiments where the first computing device processing the image to obtain information about the application comprises the first computing device processing the image to extract an identifier associated with the application, the first computing device sending an identifier associated with the application to a content provider computing device comprises the first computing device sending information about the first computing device to the content provider computing device, wherein the information is sufficient to identify the operating system of the first computing device.

In embodiments, the launch icon comprises at least one of: a one-dimensional barcode, a two-dimensional barcode, and hidden text embedded in the icon. In some such embodiments the first computing device or the content provider computing device processing the image to obtain information about the application comprises the first computing device or the content provider computing device decoding the barcode or extracting the embedded text to obtain an identifier associated with the application or a link to a download location for the application.

In embodiments, the link to a download location for the application is obtained by the content provider computing device by matching the launch icon in the image with a launch icon recorded in a database, and extracting a link recorded in association with the matched launch icon in the database.

In embodiments, the first computing device is configured to execute an application store application. In some such embodiments the link to a download location for the application is a deep link to the application listing on the application store application.

In embodiments, the method further comprises the first computing device automatically navigating to the link address.

In embodiments, the method further comprises the first computing device automatically checking whether the application is already installed on the first computing device.

In embodiments, the method further comprises the first computing device automatically downloading and installing the application.

In embodiments, the method further comprises the first computing device automatically downloading and installing the application if the first computing device determines that the application is not already installed on the first computing device.

According to a third aspect of the disclosure, there is provided a computing device comprising a processor, a display and an image capture device, wherein the processor is configured to: acquire an image, via the image capture device, wherein the image is of at least a portion of a display of another computing device and the image includes a launch icon of an application; and process the image to obtain information about the application, wherein the information about the application comprises a link to a download location for the application.

In embodiments, the processor being configured to process the image to obtain information about the application comprises: the processor being configured to process the image to extract a link. In some such embodiments, the link is a link to a download location for the application. In other such embodiments the processor is configured to use the link to request a link to a download location from a content provider computing device.

In embodiments, the processor being configured to process the image to obtain information about the application comprises the processor being configured to: send at least a part of the image to a content provider computing device, wherein the content provider computing device is configured to process the image to obtain information about the application; and receive from the content provider computing device a link to a download location for the application.

In embodiments, the processor being configured to process the image to obtain information about the application comprises the processor being configured to: process the image to extract an identifier associated with the application; send the identifier associated with the application to a content provider computing device; and receive from the content provider computing device a link to a download location for the application.

In embodiments, the link to a download location for the application is obtained by the content provider computing device by matching the launch icon in the image with a launch icon recorded in a database, and retrieving a link recorded in association with the matched launch icon in the database.

In embodiments, the processor being configured to request a link to a download location from a content provider computing device comprises the processor being configured to send information about the first computing device to the content provider computing device, wherein the information is sufficient to identify the operating system of the first computing device.

In embodiments, the processor being configured to send at least a part of the image to a content provider computing device comprises the processor being configured to send information about the first computing device to the content provider computing device, wherein the information is sufficient to identify the operating system of the first computing device.

In embodiments, the processor being configured to send an identifier associated with the application to a content provider computing device comprises the processor being configured to send information about the first computing device to the content provider computing device, wherein the information is sufficient to identify the operating system of the first computing device.

In embodiments, the launch icon comprises at least one of: a one-dimensional barcode, a two-dimensional barcode, and hidden text embedded in the icon. In some such embodiments, the processor or the content provider computing device being configured to process the image to obtain information about the application comprises the processor or the content provider computing device being configured to decode the barcode or extract the embedded text to obtain an identifier associated with the application or a link to a download location for the application.

In embodiments, the processor is configured to execute an application store application, and the link to a download location for the application is a deep link to the application listing on the application store application.

In embodiments, the processor is configured to automatically navigating to the link address.

In embodiments, the processor is configured to automatically check whether the application is already installed on the first computing device.

In embodiments, the computing device is configured to automatically download and install the application.

In embodiments, the computing device is configured to automatically download and install the application if the application is not already installed on the first computing device.

According to a further aspect of the disclosure, there is provided a computing device comprising a processor and a database, wherein the computing device is a content provider computing device and is configured to: receive an image from a first user computing device, the image comprising at least a portion of the display of a second user computing device including a launch icon associated with the application; process the image to obtain information about the application, wherein the information about the application comprises a link to a download location for the application; and send the link to a download location for the application to the first user computing device.

In embodiments, the computing device being configured to receive an image from a first user computing device include the computing device being configured to receive information about the first user computing device, the information being sufficient to identify the operating system of the first user computing device; and the computing device being configured to send the link to a download location for the application to the first user computing device comprises the computing device being configured to send a link to a download location that is compatible with the operating system of the first user computing device.

In embodiments, the launch icon comprises at least one of: a one-dimensional barcode, a two-dimensional barcode, and hidden text embedded in the icon, and the computing device being configured to process the image to obtain information about the application comprises the computing device being configured to decode the barcode or extract the embedded text to obtain an identifier associated with the application or a link to a download location for the application.

In embodiments, wherein the computing device being configured to process the image to obtain information about the application comprises the computing device being configured to: extract an identifier associated with the application from the image; query a database to retrieve a link to a download location for the application recorded in association with the identifier.

In embodiments, the computing device being configured to process the image to obtain information about the application comprises the computing device being configured to match the launch icon in the image with a launch icon recorded in the database, and to retrieve a link recorded in association with the matched launch icon in the database.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
**Figure 1** shows an exemplary computing system in which embodiments of the present invention may be used; and
**Figures 2A to 2D** are flow charts illustrating the process of providing an application to a computing device, according to an embodiment of the present invention.

Where the figures laid out herein illustrate embodiments of the present invention, these should not be construed as limiting to the scope of the invention. Where appropriate, like reference numerals will be used in different figures to relate to the same structural features of the illustrated embodiments.

### DETAILED DESCRIPTION

Specific embodiments are described below with reference to the figures.

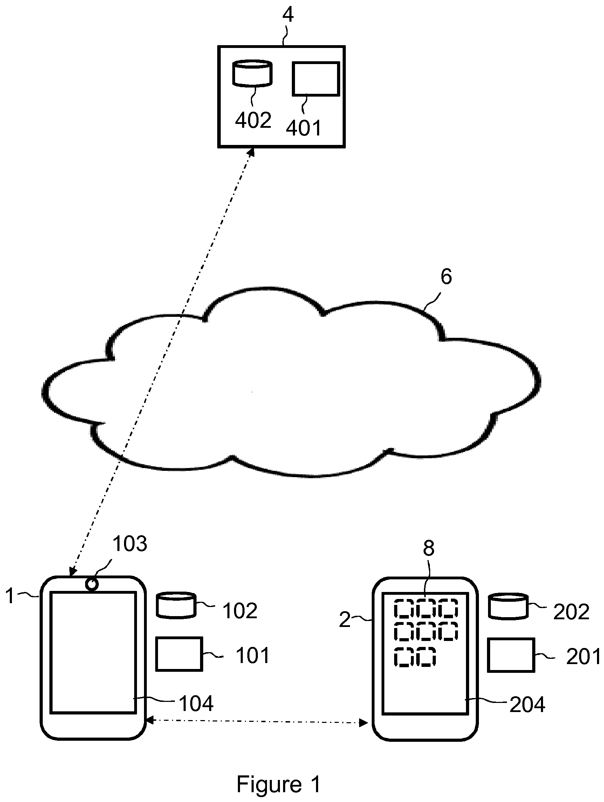

**Figure 1** shows an exemplary computing system in which embodiments of the present invention may be used.

A user (not shown - also referred to as "first user") is provided with a first computing device 1 - this may be for example a mobile computing device, such as a mobile phone or a tablet, or a fixed computing device such as a personal computer. The first computing device 1 has at least one processor 101 and at least one memory 102 together providing at least one execution environment. These devices have firmware and applications run in at least one regular execution environment (REE) with an operating system such as iOS, Android or Windows. One of these applications may be an application store. The application store is typically but not necessarily associated with a type of operating system. For example, when the device is an Android device, the application store may be the Google play store application. In another example, the device may be configured with the iOS operating system and the application store application may be the iTunes store application. The first computing device 1 is also equipped with means to communicate with other elements of computing infrastructure. These communication means may comprise an antenna and associated hardware and software to allow local wireless networking using 802.11 protocols or any other means of communication with remote computing devices. The first computing device 1 is also equipped with means to capture images, such as e.g. a digital camera and associated software, together forming an image capture device 103. The first computing device 1 comprises a user interface which includes at least a display 104. The display 104 may be a touch screen.

A user (who may be the same user as that of the first computing device 1 or a different user) is provided with a second computing device 2. The second computing device 2 comprises a processor 201, at least one memory 202 and a display 204. The second computing device 2 may have any of the features described in relation to the first computing device 1. The first 1 and second 2 computing devices may be interchangeable such that the second computing device 2 may be able to perform any of the functions described in relation to the first computing device 1.

The first computing device 1 is typically connected or connectable to a content provider computing device 4 - here connection is shown as passing through the public internet 6. The content provider computing device 4 typically comprises one or more processors 401 (e.g. servers), a plurality of switches (not shown), and one or more databases (402), and are not described further here as the details of the content provider computing device 4 used are not necessary for understanding how embodiments of the invention function and may be implemented. Further, the first computing device 1 and the second computing device 2 may be able to communicate with each other, for example via local communication protocols such as Bluetooth, or via the internet 6.

The first 1 and second 2 computing devices have applications, where an application is typically associated with a launch icon 8. A launch icon 8 is an icon associated with the application, which can be displayed on the display of a computing device on which the application is installed (such as the first computing device 1 or the second computing device 2), and which can be selected by a user via a user interface to launch the application on the computing device.

The present applicant has devised an improved method of providing an application on a computing device. In particular, the method of the invention allows an application which is installed on a second computing device to be automatically identified, and optionally downloaded and installed on a first computing device.

One of the challenges associated with the present method of providing and disseminating applications to users is that when a user is interested in an application that he/she is recommended by another user, many cumbersome and error-prone steps are necessary for the user to find, download and install the application. Therefore, there is a need for a method to facilitate the sharing of application information between user computing devices.

The present applicant has, however, appreciated that the launch icon of an application can be used to convey information that a computing device can use to obtain the application.

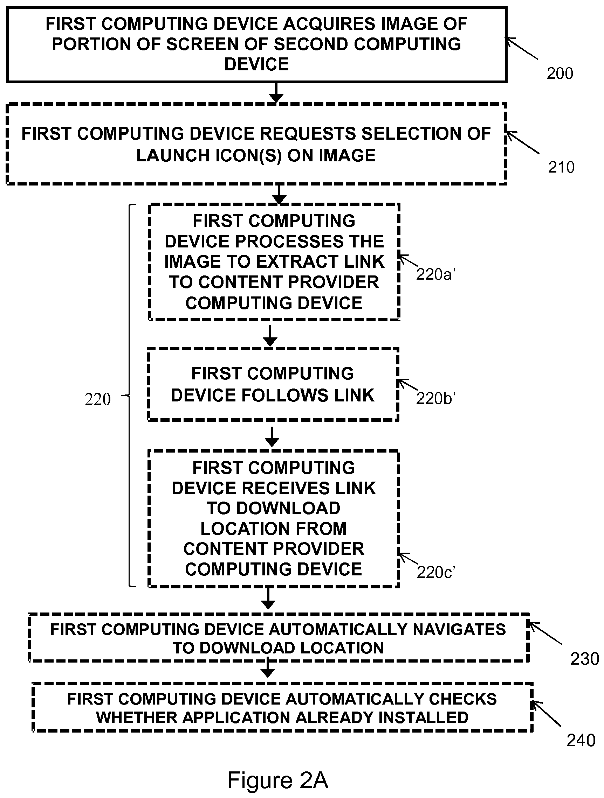

**Figures 2A to 2D** are flow charts illustrating the process of providing an application to a computing device, according to an embodiment of the present invention.

At step 200, the first computing device 1 acquires an image of at least a portion of the display 204 of the second computing device 2 with the image capture device 103. The image comprises at least a portion of the display 204 of the second computing device which includes a launch icon 8 associated with an application.

In embodiments, the image may be captured by the second computing device 2 (or any other computing device) and sent to the first computing device 1. For example, the first computing device 1 may acquire the image by receiving from the second computing device 2 a screenshot of the second computing device 2 captured by the second computing device 2. As the skilled person would understand, in such embodiments the first computing device 1 may not comprise an image capture device 103.

In embodiments, the image includes a portion of the home screen or applications directory of the second computing device 2.

In embodiments, the image may include multiple launch icons. In such embodiments, the first computing device 1 may optionally display the image on the display 104 and request 210 the user to select one or more of the launch icons 8 on the image. For example, the first computing device 1 may process the image to identify launch icons on the image, then request the user to select one or more of the launch icons identified. Alternatively, the first computing device 1 may request that the user selects one or more launch icons by cropping the image such that a single complete or substantially complete launch icon 8 remains on the image. If multiple launch icons 8 are selected, the first computing device 1 may perform each of the subsequent steps in relation to each launch icon 8.

At step 220, the first computing device 1 processes the image to obtain information about the application associated with the launch icon 8. The information about the application comprises a link to a download location for the application. Within the meaning of this document, a link is typically a uniform resource identifier (URI), such as a uniform resource location (URL). In embodiments, a link to a download location may comprise a deep link that identifies a webpage where the application can be downloaded. In embodiments, a link to a download location may comprise a deep link that identifies an application listing on an application store. For example, a link to a download location may comprise an Apple Universal Link to an application lisitng on the iTunes app store, an Android App Link to an application store application (e.g. Google Play store, Amazon app store, etc.) listing corresponding to the application associated with the launch icon. For example, a link to a download location may comprise a link with the form: https://itunes.apple.com/us/app/netflix (here linking to the Netflix iOS application listing on the iTunes application store) http://play.google.com/store/apps/details?id=com.google.android.apps.maps (here linking to the Google maps android application listing on the Google play store).

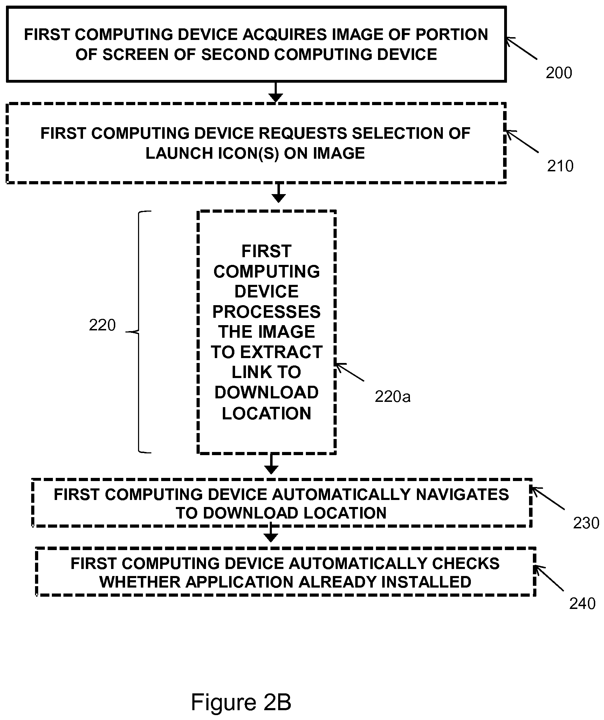

In the simplest embodiment (as shown on Figure 2B), the first computing device 1 locally processes 220a the image to extract a link which is a link to a download location.

In other embodiments (as shown on Figure 2A), the link to a download location may be obtained by the first computing device 1 via an intermediate link which is extracted by processing 220a' the image. Suitably, the intermediate link may direct to the content provider computing device 4 which is configured to return a link to a download location which is received 220c' by the first computing device 1 by following 220b' the link. For example, the intermediate link may be a single link such as those provided by the web application AppFlyer (e.g. http://myapp.onelink.me/appID, where appID is an identifier associated with the application) or those provided by onelink.to (e.g. http://onelink.to/appid, where appID is an identifier associated with the application).

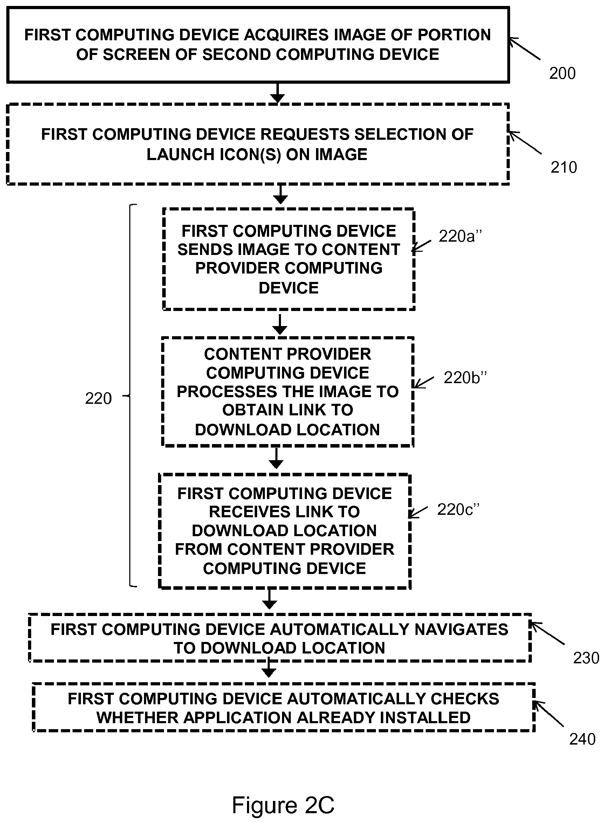

In other embodiments (as shown on Figure 2C), the first computing device 1 sends 220a" at least part of the image to the content provider computing device 4. As the skilled person would understand, the first computing device 1 may send a cropped, compressed or other processed version of the image instead of the original image. The content provider computing device 4 then processes 220b" the image to obtain information about the application, including a link to a download location for the application. The link is then sent by the content provider computing device 4 to and received 220c" by the first computing device 1.

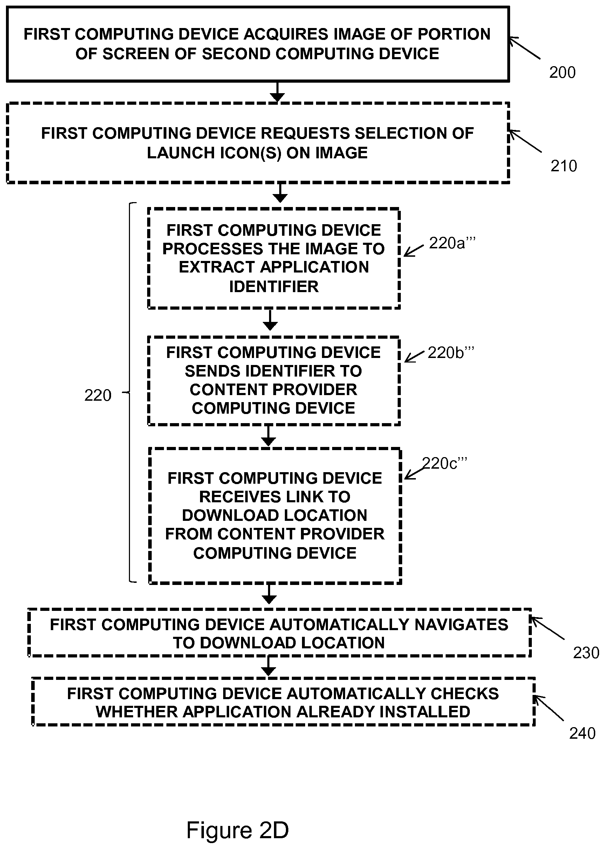

In other embodiments (as shown on Figure 2D), the link to a download location may be obtained by the first computing device 1 via an application identifier which is extracted by processing 220a'" the image. The first computing device 1 then sends 220b''' the application identifier to the content provider computing device 4. For example, the first computing device 1 may use the identifier to build an intermediate link that directs to the content provider computing device 4. For example, the intermediate link may be a single link such as those provided by the web application AppFlyer (e.g. http://myapp.onelink.me/appID, where appID is the application identifier extracted from the image by the first computing device 1) or those provided by onelink.to (e.g. http://onelink.to/appid, where appID is the identifier extracted from the image by the first computing device 1). The content provider computing device 4 is configured to return a link to a download location which is received 220c' by the first computing device 1.

In embodiments, the first computing device 1 following 220b' a link to a content provider computing device 4 to request a link to a download location, sending 220a" at least a part of the image to the content provider computing device 4 or sending 220b''' the identifier associated with the application to the content provider computing device 4 comprises the first computing device 1 sending information about the first computing device 1 to the content provider computing device 4. In other words, the first computing device 1 may send to the content provider computing device 4 information about itself, when a link to a download location is obtained from a content provider computing device 4 rather than obtained directly from the image processed locally by the first computing device 4. Suitably, the information sent by the first computing device 1 to the content provider computing device 1 may be sufficient to identify the operating system of the first computing device 1. As the skilled person would understand, the information can be sent to the content provider computing device 4 together with e.g. the image or identifier, or it can be requested by the content provider computing device 4 in a subsequent step. Advantageously, the content provider computer device 4 may be able to use this information to send a link to a download location to the computing device 1 which is adapted to the first computing device 1. For example, the content provider computing device 4 may be able to identify whether the device 1 is an Android or an Apple device, and send a deep link to the application listing on the Goole Play store app or the iTunes app store app, respectively. The content provider computing device 4 may also be able to return an error message if the application is not available for devices running the operating system (or the specific version of the operating system) that is running on the first computing device 1. Further, the content provider computing device 4 may be able to send a different link depending on the current version of the operating system that is running on the first computing device 1.

In embodiments, the launch icon 8 comprises encoded information that can be extracted when the image is processed by the first computing device 1 or the content provider computing device 4. For example, the launch icon 8 may comprises at least one of: a one-dimensional barcode, a two-dimensional barcode, and hidden text embedded in the icon 8. Techniques for embedding secret messages into graphical objects are known in the art and will not be discussed further. Depending on the embodiment and as explained above, the decoding of the encoding information may reveal text that comprises an identifier associated with the application or a link to a download location for the application.

In other embodiments, the launch icon 8 may be matched by image analysis to a collection of launch icons 8 which is recorded in a database. In such embodiments, the first computing device 1 may send 220a" at least a part of the image to the content provider computing device 4, and the content provider computing device 4 may be configured to match the launch icon 8 in the image with a launch icon 8 recorded in a database 402. The content provider computing device 4 may further be configured to extract a link recorded in association with the matched launch icon 8 in the database 402.

In embodiments, the method further comprises the first computing device 1 automatically navigating 230 to the link address, i.e. to the download location.

In embodiments, the method further comprises the first computing device 1 automatically checking 240 whether the application is already installed on the first computing device. As the skilled person would understand, while this step is illustrated as occurring after the first computing device 1 has opened the link to the download location, it is in fact possible for this step to be performed before navigating to the download location, or before contacting the content provider computing devices in embodiments where the first computing device processes the image 220a', 220'" to obtain an intermediate link or an application identifier.

In embodiments, the method further comprises the first computing device 1 automatically downloading the application. In embodiments, the first computing device 1 may only download the application if the first computing device 1 has checked whether the application was already installed and determined that it was not.

In embodiments, the method further comprises the first computing device 1 automatically installing the application.

Therefore, the invention also provides a method of providing an application on a first computing device, the method comprising performing the steps described above in relation to Figure 2.

## Claims

1. A computing device comprising a processor, a display and an image capture device, wherein the processor is configured to:
acquire an image, via the image capture device, wherein the image is of at least a portion of a display of another computing device and the image includes a launch icon of an application; and
process the image to obtain information about the application, wherein the information about the application comprises a link to a download location for the application.

2. The computing device of claim 1, wherein the processor being configured to process the image to obtain information about the application comprises: the processor being configured to process the image to extract a link, wherein the link is a link to a download location for the application, or wherein the processor is configured to use the link to request a link to a download location from a content provider computing device.

3. The computing device of claim 1, wherein the processor being configured to process the image to obtain information about the application comprises the processor being configured to:
(a) send at least a part of the image to a content provider computing device, wherein the content provider computing device is configured to process the image to obtain information about the application; and
receive from the content provider computing device a link to a download location for the application, optionally wherein the link to a download location for the application is obtained by the content provider computing device by matching the launch icon in the image with a launch icon recorded in a database, and retrieving a link recorded in association with the matched launch icon in the database; or
(b) process the image to extract an identifier associated with the application; send the identifier associated with the application to a content provider computing device; and
receive from the content provider computing device a link to a download location for the application.

4. The computing device of claim 2 or claim 3, wherein the processor being configured to request a link to a download location from a content provider computing device, send at least a part of the image to a content provider computing device or send an identifier associated with the application to a content provider computing device comprises: the processor being configured to send information about the first computing device to the content provider computing device, wherein the information is sufficient to identify the operating system of the first computing device.

5. The computing device of any preceding claim, wherein:
the launch icon comprises at least one of: a one-dimensional barcode, a two-dimensional barcode, and hidden text embedded in the icon, and
the processor or the content provider computing device being configured to process the image to obtain information about the application comprises the processor or the content provider computing device being configured to decode the barcode or extract the embedded text to obtain an identifier associated with the application or a link to a download location for the application.

6. The computing device of any preceding claim, wherein the first computing device or the processor is configured to execute an application store application, and the link to a download location for the application is a deep link to the application listing on the application store application.

7. The computing device of any preceding claim, wherein the processor is configured to:
(i) automatically navigate to the link address; and/or
(ii) automatically check whether the application is already installed on the first computing device; and /or
(iii) automatically download and install the application, and/or
(iv) automatically download and install the application if the application is not already installed on the first computing device.

8. A method for a first computing device to receive information about an application from a second computing device, wherein the first computing device comprises a processor, a display and an image capture device, and the second computing device comprises a processor and a display, the method comprising:
the first computing device acquiring an image with the image capture device, the image comprising at least a portion of the display of the second computing device including a launch icon associated with the application;
the first computing device processing the image to obtain information about the application, wherein the information about the application comprises a link to a download location for the application.

9. The method of claim 8, wherein the first computing device processing the image to obtain information about the application comprises: the first computing device processing the image to extract a link.

10. The method of claim 9, wherein the link is a link to a download location for the application, or wherein the method further comprises the first computing device using the link to request a link to a download location from a content provider computing device.

11. The method of claim 8, wherein the first computing device processing the image to obtain information about the application comprises:
the first computing device sending at least a part of the image to a content provider computing device, wherein the content provided computing device is configured to process the image to obtain information about the application; and
the first computing device receiving from the content provider computing device a link to a download location for the application, optionally wherein the link to a download location for the application is obtained by the content provider computing device by matching the launch icon in the image with a launch icon recorded in a database, and retrieving a link recorded in association with the matched launch icon in the database.

12. The method of claim 8, wherein the first computing device processing the image to obtain information about the application comprises:
the first computing device processing the image to extract an identifier associated with the application;
the first computing device sending the identifier associated with the application to a content provider computing device; and
the first computing device receiving from the content provider computing device a link to a download location for the application.

13. The method of any of claims 10 to 12, wherein the first computing device requesting a link to a download location from a content provider computing device, sending at least a part of the image to a content provider computing device, or sending an identifier associated with the application to a content provider computing device comprises: the first computing device sending information about the first computing device to the content provider computing device, wherein the information is sufficient to identify the operating system of the first computing device.

14. The method of any of claims 8 to 13, wherein:
the launch icon comprises at least one of: a one-dimensional barcode, a two-dimensional barcode, and hidden text embedded in the icon, and
the first computing device or the content provider computing device processing the image to obtain information about the application comprises the first computing device or the content provider computing device decoding the barcode or extracting the embedded text to obtain an identifier associated with the application or a link to a download location for the application.

15. The method of any of claims 8 to 14, further comprising the first computing device:
(i) automatically navigating to the link address; and/or
(ii) automatically checking whether the application is already installed on the first computing device;
(iii) automatically downloading and installing the application, and/or
(iv) automatically downloading and installing the application if the application is not already installed on the first computing device.
